# DEMANDE DE BREVET EUROPEEN

(11) **EP 3 758 198 A1**
(43) Date de publication de la demande: **30.12.2020**
(21) Numéro de dépôt: 20181806.9
(22) Date de dépôt: 23.06.2020
(51) Int. Cl.: H02K 5/20, H02K 5/15, H02K 9/19, F28F 3/02

(54) **MACHINE ELECTRIQUE TOURNANTE MUNIE D'AILETTES DE REFROIDISSEMENT**

(30) Priorité: 26.06.2019 FR 1906974; 26.06.2019 FR 1906973
(71) Demandeur: VALEO EQUIPEMENTS ELECTRIQUES MOTEUR, 94046 Créteil Cedex (FR)
(72) Inventeur: ARMIROLI, Paul, 94000 Créteil (FR)
(74) Mandataire: Prigent, Pierre

(57) **Abrégé**

L'invention porte sur une machine électrique tournante (10), notamment pour véhicule automobile, comportant:
- un stator (11) comportant un corps de stator (20) et un bobinage (24) inséré dans des encoches (21) du corps de stator (20),
- un rotor (12) monté sur un arbre (13), ledit rotor (12) comportant un corps de rotor (30) et des pôles formés par des aimants permanents (31), et
- au moins un carter (15) comportant des moyens de guidage (17) pour guider en rotation l'arbre (13) et
- une chambre de refroidissement (18) ménagée dans le carter (15) et dans laquelle circule un liquide de refroidissement,
- des ailettes de refroidissement (19) étant disposées à l'intérieur de la chambre de refroidissement (18).

## Description

La présente invention porte sur une machine électrique tournante munie d'ailettes de refroidissement. L'invention trouve une application particulièrement avantageuse, mais non exclusive, avec les machines électriques tournantes pour véhicules automobiles.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre par exemple par l'intermédiaire de roulements. Le rotor comporte un corps formé par un empilage de feuilles de tôles maintenues sous forme de paquet au moyen d'un système de fixation adapté, tel que des rivets traversant axialement le corps du rotor de part en part. Le rotor comporte des pôles formés par exemple par des aimants permanents logés dans des cavités ménagées dans la masse magnétique du rotor, comme cela est décrit par exemple dans le document EP0803962. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face interne est pourvue d'encoches ouvertes vers l'intérieur pour recevoir des enroulements de phases. Ces enroulements de phases traversent les encoches du corps du stator et forment des chignons faisant saillie de part et d'autre du corps du stator. Les enroulements de phases sont obtenus par exemple à partir d'un fil continu recouvert d'émail. Ces enroulements sont des enroulements polyphasés connectés en étoile ou en triangle dont les sorties sont reliées à un onduleur de puissance.

Dans certains types de chaînes de traction de véhicule automobile, une machine électrique tournante réversible de forte puissance est accouplée à la boîte de vitesses du véhicule ou à un train du véhicule automobile. La machine électrique est alors apte à fonctionner dans un mode alternateur pour fournir notamment de l'énergie à la batterie et/ou au réseau de bord du véhicule, et dans un mode moteur, non seulement pour assurer le démarrage du moteur thermique, mais également pour participer à la traction du véhicule seule ou en combinaison avec le moteur thermique. Compte tenu des courants importants circulant dans les enroulements de phases du bobinage, ces machines électriques tournantes de forte puissance génèrent des calories au niveau du stator qu'il est possible d'évacuer en réalisant une chambre de refroidissement dans le carter.

La présente invention vise à améliorer les performances de refroidissement du système en proposant une machine électrique tournante, notamment pour véhicule automobile, comportant:
- un stator comportant un corps de stator et un bobinage inséré dans des encoches du corps de stator,
- un rotor monté sur un arbre, ledit rotor comportant un corps de rotor et des pôles formés par des aimants permanents, et
- au moins un carter comportant des moyens de guidage pour guider en rotation l'arbre, et
- une chambre de refroidissement ménagée dans le carter et dans laquelle circule un liquide de refroidissement,
- des ailettes de refroidissement étant disposées à l'intérieur de la chambre de refroidissement.

L'invention permet ainsi, en augmentant la surface d'échange entre le liquide de refroidissement et le carter, d'augmenter le coefficient d'échange thermique entre le carter et le stator afin de favoriser l'évacuation des calories générées par le bobinage statorique.

Selon une réalisation, les ailettes de refroidissement sont des ailettes d'un radiateur de véhicule automobile.

Selon une réalisation, les ailettes de refroidissement sont constituées par des portions pliées d'une tôle.

Selon une réalisation, la tôle comporte des trous de passage de liquide de refroidissement.

Selon une réalisation, la tôle peut être circulaire et sans portion pliée.

Selon une réalisation, la chambre de refroidissement est délimitée par deux paliers formant le carter.

Selon une réalisation, la chambre de refroidissement est ménagée dans un seul palier.

Selon une réalisation, la machine électrique tournante présente une puissance nominale allant de 10 à 25 kW, notamment sous 48V.

Selon une réalisation, les aimants permanents sont des aimants en terres rares.

Selon une réalisation, le corps de stator contient quatre conducteurs par encoche.

Selon une réalisation, ladite machine électrique tournante présente une puissance transitoire mécanique en mode moteur pendant 30 secondes sous 36 Volts minimum qui est de 16kW.

Selon une réalisation, ladite machine électrique tournante présente une puissance transitoire mécanique en mode moteur pendant 30 secondes sous 48 Volts minimum qui est de 21 kW.

Selon une réalisation, ladite machine électrique tournante présente une puissance transitoire mécanique en mode moteur pendant 30 secondes sous 52 Volts minimum qui est de 26kW.

Selon un aspect de l'invention, la machine électrique tournante comporte en outre un élément de conduction thermique présentant un coefficient de conduction thermique supérieur à celui de l'air, ledit élément de conduction thermique étant disposé entre un chignon du bobinage et le palier. Cette élément de conduction est disposer de façon à favoriser une évacuation de calories du bobinage vers le palier de la machine électrique tournante.

Selon une réalisation, l'élément de conduction thermique est rapporté par rapport au corps de stator.

Selon une réalisation, l'élément de conduction thermique est un élément non conducteur électrique. L'élément de conduction thermique présente une mauvaise conductivité électrique, de sorte qu'il n'influe pas sur les parties fonctionnelles de la machine électrique. L'élément de conduction thermique peut être isolant.

Selon une réalisation, l'élément de conduction thermique est un élément de type biphasique, comme par exemple un caloduc.

Selon une réalisation, la machine électrique comprend un deuxième élément de conduction thermique. Chacun des deux éléments de conduction thermique étant disposé d'un côté du stator différent. Les éléments de conduction thermique peuvent encadrer axialement le stator.

L'invention sera mieux comprise à la lecture de la description qui suit et à l'examen des figures qui l'accompagnent. Ces figures ne sont données qu'à titre illustratif mais nullement limitatif de l'invention.
[Figure 1] La figure 1 est une vue en coupe longitudinale d'une machine électrique tournante selon l'invention comportant des ailettes de refroidissement favorisant une évacuation des calories du stator vers un carter;
[Figure 2] La figure 2 est une vue en perspective d'une tôle pliée permettant la réalisation des ailettes de refroidissement;
[Figure 3] La figure 3 est une vue en perspective éclatée d'un stator de la machine électrique tournante selon l'invention;
[Figure 4] La figure 4 est une vue en perspective éclatée du rotor de la machine électrique tournante selon la présente invention.
[Figure 5] La figure 5 est une vue en coupe longitudinale d'une machine électrique tournante selon l'invention comportant un élément de conduction thermique favorisant une évacuation de chaleur du bobinage vers un palier;
[Figure 6] La figure 6 est une vue en perspective d'une tôle pliée permettant la réalisation des ailettes de refroidissement;

Les éléments identiques, similaires, ou analogues conservent la même référence d'une figure à l'autre.

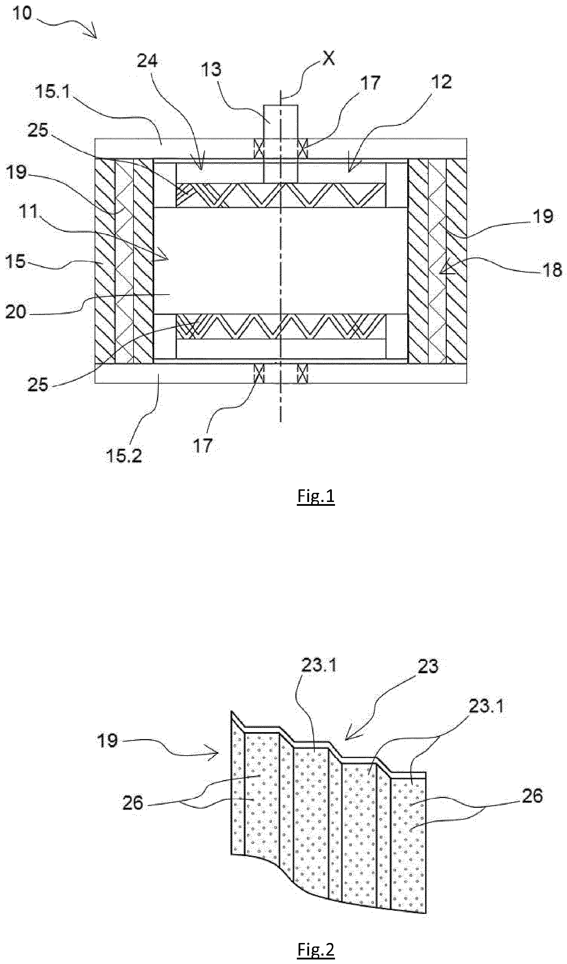

La figure 1 montre une machine électrique tournante 10 comportant un stator 11 polyphasé entourant le rotor 12 d'axe X correspondant à l'axe de la machine électrique. Le rotor 12 est monté sur un arbre 13. Le stator 11 entoure le rotor 12 avec présence d'un entrefer entre la périphérie interne du stator 11 et la périphérie externe du rotor 12.

Le stator 11 est monté à l'intérieur d'un carter 15 muni de moyens de guidage 17 pour guider en rotation l'arbre 13, tels que des roulements à billes. Le carter 15 est réalisé de préférence dans un matériau métallique, par exemple en aluminium ou en partie en acier. Le carter 15 comporte une chambre de refroidissement 18 pour la circulation d'un liquide de refroidissement, tel que de l'eau ou de l'huile. La chambre de refroidissement 18 pourra être délimitée par deux paliers 15.1, 15.2 formant le carter 15 ou ménagée dans un seul palier 15.1, 15.2.

Afin de favoriser une évacuation des calories du stator 11 vers le carter 15, des ailettes de refroidissement 19 sont disposées à l'intérieur de la chambre de refroidissement 18.

Les ailettes de refroidissement 19 sont de préférence des ailettes d'un radiateur de véhicule automobile. Cela permet d'utiliser une structure de coût réduit réalisée en grande série pour d'autres applications.

Comme on peut le voir sur la figure 2, les ailettes 19 sont constituées par des portions pliées 23.1 d'une tôle métallique 23. Ces portions pliées 23.1 sont pliées alternativement dans un sens puis dans un autre. Entre les portions pliées 23.1 adjacentes, il existe ainsi une alternance de sommets et de creux suivant un allongement de la tôle pliée 23. La tôle 23 comporte des trous 26 de passage de liquide de refroidissement. Les portions pliées 23.1 pourront s'étendre à l'intérieur de la chambre 18 circonférentiellement par rapport à l'axe X de la machine électrique 10.

On dispose ainsi d'une grande surface d'échange entre le liquide de refroidissement circulant dans la chambre 18 et le carter 15 tout en créant des turbulences dans le liquide de refroidissement. Cela contribue à augmenter un coefficient d'échange thermique et le transfert de chaleur entre le carter et le liquide de refroidissement.

Le gain estimé pour une même température de liquide de refroidissement est directement proportionnel à ce coefficient d'échange thermique noté h. Pour une puissance P dissipée, on a l'expression suivante: P=h*deltaT, "deltaT" étant une variation de température. En conséquence, pour une même puissance P à dissiper, si on augmente le coefficient d'échange thermique h en ajoutant des ailettes de refroidissement 19 dans la chambre 18, on diminue "deltaT". Donc une augmentation de 10 % du coefficient h permet d'obtenir une diminution de 10% du paramètre "deltaT".

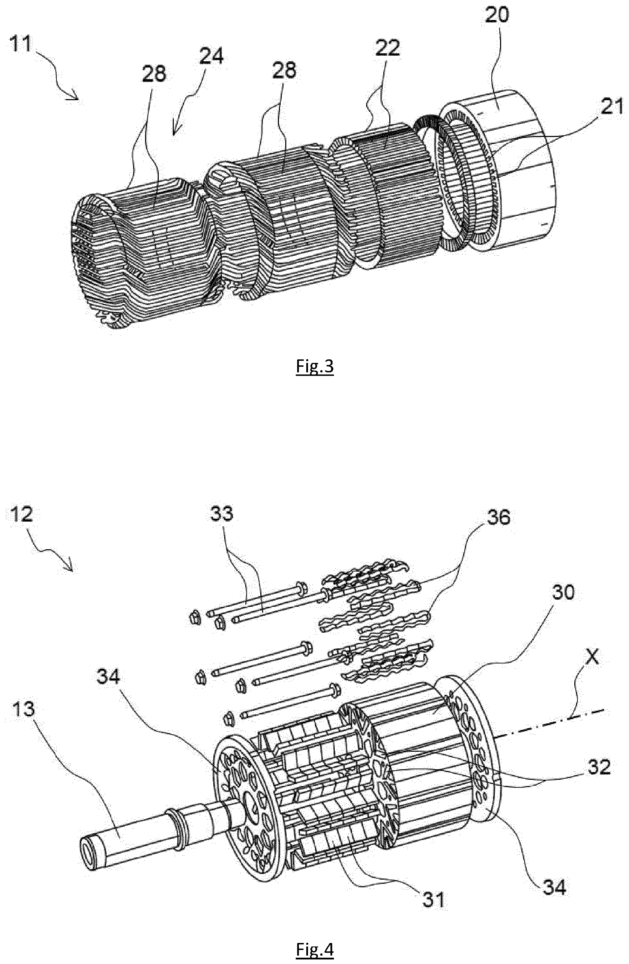

Comme on peut le voir sur la figure 3, le stator 11 comporte un corps 20 en forme de paquet de tôles doté d'encoches 21, par exemple du type semi-fermées, équipées d'isolants d'encoches 22 pour le montage d'un bobinage 24. Le bobinage 24 est muni de chignons 25 s'étendant en saillie de part et d'autre du corps de stator 20.

Suivant un exemple de réalisation, le bobinage 24 est formé à partir d'éléments conducteurs 28 en forme d'épingles reliées électriquement entre elles par exemple par soudage. Le stator 11 contient avantageusement quatre conducteurs par encoche 21, un conducteur correspondant à une branche d'une épingle 28 de bobinage. Le bobinage 24 est par exemple un bobinage de type triphasé ou double triphasé, dont les enroulements de phases sont connectés en étoile ou en triangle. Le stator 11 pourra également présenter une configuration vrillée suivant laquelle des tôles du corps de stator 20 sont décalées angulairement les unes par rapport aux autres suivant leur circonférence. Les phases du bobinage 24 sont reliées à un onduleur de puissance comportant des composants électroniques, tels que des diodes ou des transistors par exemple de type MOSFET.

Par ailleurs, comme on peut le voir sur la figure 4, le rotor 12 comporte un corps de rotor 30 sous la forme d'un paquet de tôles pour diminuer les courants de Foucault, ainsi que des pôles constitués par des aimants permanents 31 en terres rares disposés à l'intérieur de cavités 32 de forme correspondante. Un pôle est formé par des aimants 31 en terres rares implantés de préférence suivant une forme en V en périphérie externe du rotor 12. Le nombre de paires de pôles est compris entre 4 et 8, et vaut de préférence 5.

Le rotor 12 est maintenu par des tirants 33 en un même nombre que le nombre de pôles du rotor 12. Ces tirants 33 traversent deux pièces d'équilibrages 34 ainsi que l'ensemble des tôles magnétiques du corps de rotor 30.

Des organes de maintien 36, tels que des ressorts ou des languettes ou tout autre moyen équivalent, sont disposés de façon à maintenir en position les aimants permanents 31 à l'intérieur des cavités 32.

La forme des pôles du rotor 12 est définie de façon à obtenir un flux magnétique continu dans l'entrefer. Les pôles présentent avantageusement une forme arrondie avec un rayon minimum de 5 degrés. Cela permet de réduire les forces magnétiques dans l'entrefer ainsi que les bruits.

La configuration des pôles permet d'avoir un effet de réluctance (Ld différent de Lq) compris typiquement entre 5 et 10%, ce qui permet d'augmenter le couple nominal de la machine électrique 10 d'au moins 3%.

Il est possible de vriller le rotor 12, c'est-à-dire que des tôles du corps de rotor 30 pourront être décalées angulairement les unes par rapport aux autres suivant leur circonférence. Afin de réaliser ce décalage qui permet de décaler progressivement les pôles, on pourra utiliser des aimants permanents 31 fractionnés. Les différents aimants 31 d'un même pôle pourront ainsi être décalés angulairement les uns par rapport aux autres pour renforcer l'effet continu·des formes d'ondes des signaux dans l'entrefer (courants et tensions de phase).

Dans un mode de réalisation particulier, les performances recherchées de la machine électrique 10 sont indiquées ci-après. La machine électrique 10 présente un couple de l'ordre de 82 N.m à faible vitesse.

La machine électrique 10 présente une puissance transitoire mécanique en mode moteur pendant 30 secondes sous 36 Volts minimum qui est de 16 kW. La puissance est de 14 kW en mode continu, c'est-à-dire pour un fonctionnement en mode moteur pour une durée supérieure à 1 minute.

La machine électrique 10 présente une puissance transitoire mécanique en mode moteur pendant 30 secondes sous 48 Volts minimum qui est de 21 kW. La puissance est de 18 kW en mode continu c'est-à-dire pour un fonctionnement en mode moteur pour une durée supérieure à 1 minute.

La machine électrique 10 présente une puissance transitoire mécanique en mode moteur pendant 30 secondes sous 52 Volts minimum qui est de 26 kW. La vitesse maximum est au minimum de 20000 tours/min en régime continu.

Suivant un exemple de réalisation particulier, la machine électrique 10 est de type double triphasé avec une longueur axiale de fer dans le rotor 12 et le stator 11 de l'ordre de 66 mm, un diamètre de l'ordre de 161 mm et un poids de l'ordre de 15 kg. Par "de l'ordre de", on entend une variation de plus ou moins 10% autour de la valeur.

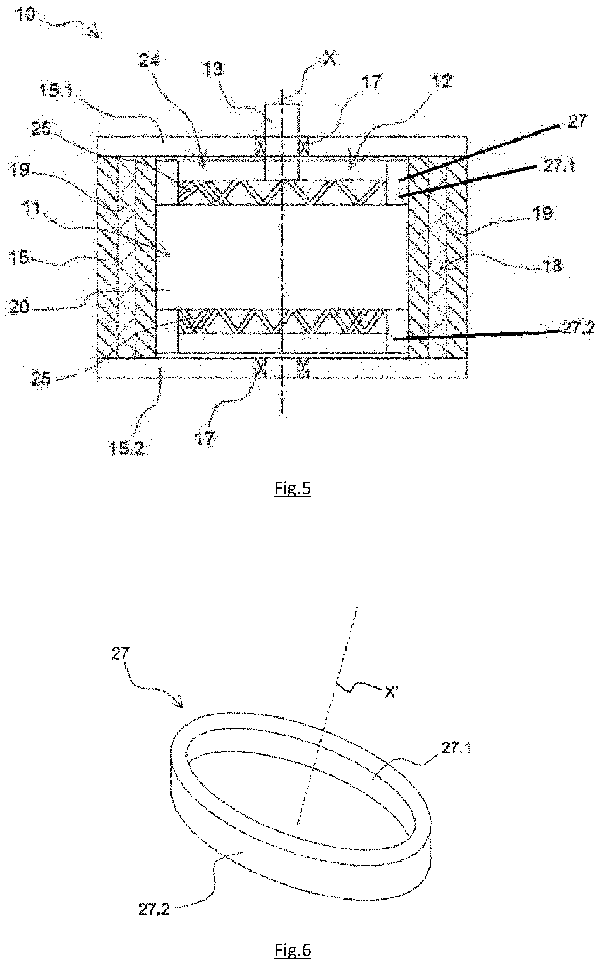

En référence aux figures 5 et 6 et afin de favoriser une évacuation des calories du chignon 25 du bobinage 24 vers un des paliers 14, 15 de la machine électrique tournante 10, on utilise au moins un élément de conduction thermique 27 présentant un coefficient de conduction thermique supérieur à celui de l'air. Un élément de conduction thermique 27 est disposé entre un chignon 25 du bobinage 24 et un palier 14, 15 correspondant. L'élément de conduction thermique 27 présente une forme annulaire d'axe X'. L'élément de conduction est destiné à être monté de façon coaxiale avec le stator 11 et le rotor 12, de sorte que les axes X et X' sont destinés à être confondus l'un avec l'autre. Une face interne 27.1 de l'élément de conduction thermique 27 est en contact avec une périphérie externe d'un chignon 25 et une face externe 27.2 de l'élément de conduction thermique 27 est en contact avec une face interne d'un palier 14, 15 correspondant.

De préférence, l'élément de conduction thermique 27 est rapporté par rapport au corps de stator 20, c'est-à-dire qu'il n'est pas moulé avec le corps de stator 20 mais constitue une pièce distincte par rapport au corps de stator 20. L'élément de conduction thermique 27 pourra éventuellement être collé pour le maintenir en position à l'intérieur de la machine électrique 10.

L'élément de conduction thermique 27 est un élément mauvais conducteur électrique. L'élément de conduction thermique 27 est un élément de type biphasique, comme par exemple un caloduc.

L'élément de conduction thermique 27 contribue à augmenter le coefficient d'échange thermique entre les paliers 14, 15 et les chignons de bobinage 25. Le gain estimé pour une même température de liquide de refroidissement est directement proportionnel à ce coefficient d'échange thermique noté h. Pour une puissance P dissipée, on a l'expression suivante P=h*deltaT, delta T étant une variation de température. En conséquence, pour une même puissance P à dissiper, si on augmente le coefficient d'échange thermique h en ajoutant au moins un élément de conduction thermique 27, on diminue "deltaT". Donc une augmentation de 10 % du coefficient h permet une diminution de 10% du paramètre "deltaT".

Bien entendu, la description qui précède a été donnée à titre d'exemple uniquement et ne limite pas le domaine de l'invention dont on ne sortirait pas en remplaçant les différents éléments par tous autres équivalents.

## Revendications

1. Machine électrique tournante (10), notamment pour véhicule automobile, comportant:
- un stator (11) comportant un corps de stator (20) et un bobinage (24) inséré dans des encoches (21) du corps de stator (20),
- un rotor (12) monté sur un arbre (13), ledit rotor (12) comportant un corps de rotor (30) et des pôles formés par des aimants permanents (31), et
- au moins un carter (15) comportant des moyens de guidage (17) pour guider en rotation l'arbre (13)
- une chambre de refroidissement (18) ménagée dans le carter (15) et dans laquelle circule un liquide de refroidissement,
**caractérisée en ce que** des ailettes de refroidissement (19) sont disposées à l'intérieur de la chambre de refroidissement (18).

2. Machine électrique tournante selon la revendication 1, **caractérisée en ce que** les ailettes de refroidissement (19) sont des ailettes d'un radiateur de véhicule automobile.

3. Machine électrique tournante selon la revendication 1 ou 2, **caractérisée en ce que** les ailettes de refroidissement (18) sont constituées par des portions pliées (23.1) d'une tôle (23).

4. Machine électrique tournante selon la revendication 3, **caractérisé en ce que** la tôle (23) comporte des trous (26) de passage de liquide de refroidissement.

5. Machine électrique tournante selon l'une quelconque des revendications 1 à 4, **caractérisé en ce que** la chambre de refroidissement (18) est délimitée par deux paliers (15.1, 15.2) formant le carter (15).

6. Machine électrique tournante selon l'une quelconque des revendications 1 à 4, **caractérisée en ce que** la chambre de refroidissement (18) est ménagée dans un seul palier (15.1, 15.2).

7. Machine électrique tournante selon l'une quelconque des revendications 1 à 6, **caractérisée en ce qu'**elle présente une puissance nominale 10 à 25 kW, notamment sous 48V.

8. Machine électrique tournante selon l'une quelconque des revendications 1 à 7, **caractérisée en ce que** les aimants permanents (31) sont des aimants en terres rares.

9. Machine électrique tournante selon l'une quelconque des revendications 1 à 8, **caractérisée en ce que** le corps de stator (20) contient quatre conducteurs par encoche (21).
